# EUROPEAN PATENT APPLICATION

(11) **EP 4 212 721 A1**
(43) Date of publication of application: **19.07.2023**
(21) Application number: 22151976.2
(22) Date of filing: 18.01.2022
(51) Int. Cl.: F03D 9/19, F03D 80/80

(54) **WIND TURBINE WITH A HYDROGEN PRODUCTION SYSTEM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

A wind turbine is provided that comprises a nacelle (10) configured to be arranged on a wind turbine tower (103), a nacelle housing (11) of the nacelle (10), wherein the nacelle housing (11) is configured to house at least part of an electrical power generation system (20) of the wind turbine (100), and a hydrogen production system (30). The hydrogen production system (30) comprises an electrolyzer (31) configured to receive electrical power from the electrical power generation system (20), wherein the electrolyzer (31) is arranged inside said nacelle housing (11) of the nacelle (20) in which at least said part of the electrical power generation system (20) is arranged. One or more other components (32, 33, 34, 35, 36, 37, 38) of the hydrogen production system (30) are arranged at a base (105) of the wind turbine tower (103) and/or within the wind turbine tower (103).

## Description

### FIELD OF THE INVENTION

The present invention relates to a wind turbine comprising a hydrogen production system and to a method of assembling a respective wind turbine.

### BACKGROUND

The wind turbines of conventional wind farms are generally configured to produce AC electrical power, which is transported using a conventional power grid or using for example high-voltage AC (HVAC) links that can operate at voltages between 100 and 400 kV. An offshore wind farm can for example be connected by a respective HVAC link. Yet the installation of the respective power transmission lines and in particular the costs associated with the cable itself are quite high, especially if the wind farm is located further away from shore.

In order to be capable of storing generated electric power and to provide a different means of distributing generated power, the conversion of the generated power into hydrogen gas, for example by electrolysis, is being considered. A gasproducing facility may for example be placed at or near an onshore wind farm, and generated hydrogen gas can be transported by conventional means, such as pipes, tank trucks, or the like. Hydrogen gas may also be used to produce other gaseous products, such as ammonia or methane. Produced hydrogen gas may be used in hydrogen fuel cells to produce electricity. The transport of hydrogen gas in a pipe system may be less expensive than transporting the electricity directly via respective high-voltage links to a utility grid.

The document WO 2021/098929 A1 discloses an alternative power output from a wind turbine. The document in particular suggests the providing of a hydrogen production system in containers, such as shipping freight containers, which are attached by a mounting system to a nacelle of the wind turbine. A coupling mechanism including respective hooks is provided for mechanically connecting the containers to the nacelle. Such system may increase the weight and size of the nacelle and may further not be suitable for offshore applications.

Generally, the hydrogen production facility is provided separate from the wind turbines, it may for example be provided as a separate facility in the onshore wind farm or may be provided on a separate offshore platform for an offshore wind farm. It is desirable to improve the efficiency of such systems and to avoid the high costs associated with transporting generated electrical power over long distances. It is in particular desirable to provide a system suitable for offshore applications.

### SUMMARY

Accordingly, there is a need to mitigate at least some of the drawbacks mentioned above and to improve the way in which energy extracted from the wind can be made available by a wind turbine.

This need is met by the features of the independent claims. The dependent claims describe embodiments of the invention.

According to an embodiment of the invention, a wind turbine comprising a nacelle configured to be arranged on a wind turbine tower and a nacelle housing of the nacelle is provided. The nacelle housing is configured to house at least part of an electrical power generation system of the wind turbine. The wind turbine further comprises a hydrogen production system including an electrolyzer configured to receive electrical power from the electrical power generation system. The electrolyzer is arranged inside the same nacelle housing of the nacelle in which at least the part of the electrical power generation system is arranged. One or more other components of the hydrogen production system are arranged at a base of the wind turbine tower and/or within the wind turbine tower.

By arranging the part of the power generation system and the electrolyzer within the same nacelle housing, a direct electrical connection between the power generation system and the electrolyzer can be provided. Accordingly, large diameter cables may for example be employed that have only relatively low electrical losses, thus improving the efficiency. The wind turbine may be configured to supply the largest part (e.g. >50%; or even all electrical power except electrical power required for operating auxiliary components of the wind turbine and/or the other components of the hydrogen production system) of generated electrical power directly to the electrolyzer for generating hydrogen. Accordingly, no other high-power electric components, such as a DC/AC converter to generate AC electrical power at the desired frequency or a wind turbine transformer to transform the generated electric power to a voltage level suitable for transmission may be required. Significant weight savings may thus be achieved in the nacelle, and space may be freed inside the nacelle for the electrolyzer. The nacelle may thus be maintained at a comparable size and weight as a conventional nacelle of a wind turbine that provides an output of AC electrical power. Likewise, losses due to power transformation and conversion may be reduced or prevented.

Furthermore, the nacelle may not require any additional structures arranged outside of and attached to the nacelle, which are exposed to the environment, which is particularly beneficial for offshore wind turbines. Further, the nacelle may include an air-conditioning system that adjusts the humidity and/or temperature inside the nacelle, in particular to prevent the exposure of wind turbine components inside the nacelle to the salt-laden humid air of the offshore environment. The electrolyzer may thus benefit from a respective humidity and temperature control. Further, the nacelle housing can remain small and streamlined and may thus pose less resistance to the wind. Also, no feed-throughs through outer walls of the nacelle housing may be required, and no mounting system may be required, thus further reducing problems related to corrosion. Also, since only the electrolyzer may be placed inside the nacelle housing, no particular dedicated crane or hoisting systems may be required for lifting large components of the hydrogen production system to the nacelle.

In an embodiment, the other components of the hydrogen production system comprise at least a gas/liquid separator configured to receive a gas/liquid output from the electrolyzer. The gas/liquid separator is arranged at the base of the wind turbine tower and/or within the wind turbine tower. The number of components arranged inside the nacelle, in particular of the hydrogen production system, may thus be kept low, further decreasing the weight of the nacelle and facilitating assembly of the wind turbine. In particular in offshore environments, it is beneficial if the number and/or weight of components that need to be lifted up to the level of the nacelle can be kept low.

The other components of the hydrogen production system arranged at the base of the wind turbine tower and/or within the wind turbine tower may include at least one or a combination of a desalination unit configured to desalinate seawater and to provide desalinated water to the electrolyzer, a pump arrangement configured to pump water from the base of the wind turbine tower to the electrolyzer in the nacelle, a gas dryer unit, a gas purification unit (in particular for treating produced gas), a compressor unit configured to compress gas produced by the electrolyzer (e.g. for transporting the gas onshore or into a storage tank on the wind turbine or on a floating vessel), a water treatment unit which may be configured to filter and/or sterilize water (prior and/or after desalination), and electrical power and/or control equipment of the hydrogen production system. For example two, three, four, or all of the components may be provided. The desalination unit and the water treatment unit may for example form part of a water treatment system. The water treatment unit may provide filtration, purification, sterilization, UV-treatment, and/or the like, and it may employ active and/or passive filters. A pump arrangement may for example include a pump on a platform at the base of the tower, but may also include a submersible pump configured to be submerged in seawater and to provide seawater to the desalination unit, and/or a pressure pump to boost the pressure at or above the platform, e.g. within the tower, to feed the electrolyzer. For example, at least the gas/liquid separator, the desalination unit, the pump arrangement and the water treatment unit may be provided at the base of the tower, preferably on a platform.

The one or more other components may for example form part of a group of components of the hydrogen production system, and the group of components may comprise all components of the hydrogen production system except the electrolyzer, fluid and electrical connections towards the electrolyzer, a purifier for water received by the electrolyzer, and monitoring and control components of the electrolyzer. At least all components of the group may be arranged at the base of the wind turbine tower and/or within the wind turbine tower. The components of this group may in particular not be arranged within the nacelle housing. By arranging all components of this group at the base of the tower, significant savings regarding the weight and space in the nacelle may be achieved. At the same time, efficiency is increased and transportation of the generated energy is made less expensive.

The wind turbine may include a platform arranged at the base of the wind turbine tower. The one or more other components of the hydrogen production system may be arranged on the platform and/or within the wind turbine tower. For example, all of the components of the above-mentioned group may be arranged on the platform. The platform may in particular be an offshore platform that may be supported by the same support structure (e.g. foundation) that supports the wind turbine tower. It may in particular be arranged above sea level, and it may be a so-called service platform.

For example, at least the desalination unit, the gas/liquid separator, and the water treatment unit may be arranged on the platform. Preferably, the pump arrangement, and electrical power and control equipment may further be arranged on the platform. The components may be provided in respective containers, and the containers may be arranged on the platform. A component may be provided in its own container, two or more components may be provided in the same container, or a component may be distributed across two or more containers. Such containers may for example be standardized freight containers, such as shipping freight containers, in particular a sea-freight container or ISO-container. The container may for example be a series 1 freight-container in accordance with ISO668:2013. The pump arrangement may include a pump at the level of the platform, but may include further pumps, e.g. the above-mentioned submerged pump or a pump higher up within the wind turbine tower.

The containers may be arranged on the platform around the wind turbine tower. Containers may for example be arranged on at least two, preferably three sides of the wind turbine tower. Efficient use of the space available on the platform may thus be made.

The base of the wind turbine tower may refer to the lower part of the wind turbine tower arranged above the sea level. The base may in particular be an area of the tower close to or next to the support structure (foundation) of the wind turbine (e.g. the end of the tower at which the tower is mounted to the support structure, e.g. at a tower flange), for example close to but above the water surface. It should be clear that in some examples, the tower may also extend to below the sea level. The wind turbine may be an offshore wind turbine. The wind turbine may be supported by a support structure, such as a jacket, a monopile, a gravity-based support structure or a floating foundation. The wind turbine may further include a storage tank for storing produced gas, e.g. hydrogen tank, which may be arranged on the platform, in the support structure, in the wind turbine tower, and/or the like.

The hydrogen production system may comprise at least one water supply conduit to supply water from a desalination unit of the hydrogen production system towards the electrolyzer and a gas/liquid return conduit configured to provide a gas/liquid mixture to a gas/liquid separator of the hydrogen production system arranged at the base of the wind turbine. The water supply conduit and the gas/liquid return conduit may extend through the wind turbine tower. For example, the conduits may be flexible or may comprise at least a flexible section, they may for example be provided by flexible pipes or hoses or the like. This may allow rotation of the nacelle by a certain number of turns via the yaw drive. Additionally or alternatively, the respective conduits may comprise a rotating interface that allows two sections of the conduit to rotate against each other without becoming twisted. Respective interfaces or couplers are known, and any of these known interfaces can be employed. The wind turbine may comprise a controller configured to control rotation of the nacelle by operation of a yaw drive, and the controller may be configured to limit the number of turns of the nacelle to a predetermined number. It may thus be ensured that rotation of the nacelle may not lead to damage of the respective conduits.

In an embodiment, the nacelle housing includes a surrounding outer wall that confines an inner volume inside the nacelle housing. The part of the electrical power generation system and the electrolyzer are arranged within this (i.e. the same) inner volume. The nacelle housing may in particular be formed by one cuboid or semi-ellipsoidal body. A generator of the power generation system may be arranged within the nacelle housing, or may have a separate generator housing that may be mounted to one side of the nacelle housing or that may form one face or wall of the nacelle housing. The wind turbine may comprise the electrical power generation system.

The part of the electrical power generation system may comprise at least one of a generator of the wind turbine configured to generate AC electrical power from rotation of a wind turbine rotor, a transformer, an AC-to-DC converter, and a distribution bus or cable system that is configured to distribute electrical power to plural electrolyzer stacks of the electrolyzer. Preferably, the part arranged inside the nacelle housing comprises at least the AC-to-DC power converter which is configured to provide AC-to-DC conversion of AC electrical power received from a generator of the electrical power generation system and to provide converted DC electrical power to the electrolyzer. Preferably, the part further includes the distribution bus or cable system. By arranging these components inside the same housing as the electrolyzer, an efficient conversion and distribution of the electrical power to electrolyzer stacks may be achieved.

The electrical power distribution bus and/or cable system may in some implementations be arranged within the same nacelle housing as the electrolyzer, but may be considered not to form part of the power generating system. At least one other component of the power generating system may then additionally be arranged within the same nacelle housing.

The power converter may be configured to control the amount of electrical power supplied to the electrolyzer. It may in particular be configured to adjust the load on the generator, in particular by adjusting generator torque. The power converter may for example be controlled by a respective converter controller, which may in turn be controlled by a wind turbine controller. Operation of the generator and of the electrolyzer within the applicable design limits may thereby be ensured.

In some examples, the part of the power generation system may comprise a transformer configured to adjust a voltage level provided by a generator of the power generation system to a voltage level at which one or more electrolyzer stacks of the electrolyzer are operable. Such transformer may for example be a low-voltage/low-voltage transformer, it may for example operate with input and output voltages below 2.000 or below 1.000 V. For example, it may transform a voltage of 690 V provided by the generator to 400 V required at the electrolyzer, or to 800 V or 1200 V required at two or three, respectively, series connected electrolyzer stacks. It should be clear that the transformation ratio of such transformer may be selected in dependence on the type of generator and the type and electrical configuration of the employed electrolyzer, and that the above numbers are only examples.

The nacelle and in particular the nacelle housing may not comprise a DC-to-AC power converter that converts a large amount (e.g. >25%) of electric power generated by a generator of the power generation system. A small DC-to-AC converter, e.g. as part of a small AC-to-AC back-to-back converter or coupled to the output of the above-mentioned AC-to-DC converter, may be present in the nacelle in order to supply auxiliary loads of the wind turbine, such as the yaw drive, blade pitch drives, control and monitoring systems and the like; these may however only consume a relatively small fraction of the generated electric power (e.g. smaller than 200 kW or 150 kW). Further, the nacelle and in particular the nacelle housing may not comprise a low-voltage (LV) to medium-voltage (MV) or high-voltage (HV) transformer, in particular no transformer that transforms electric power from a voltage level below 2.000 V to a voltage level above 2.000 V. Accordingly, by not providing such standard conversion and transformation equipment within the nacelle, significant weight and space savings may be achieved.

The nacelle housing may in some embodiments comprise an inner wall that is configured to separate an inner volume of the nacelle housing into at least two chambers. The wall may be configured to restrict or prevent a flow of gas between the chambers (it may however include a sealable door or bulkhead). The electrolyzer may be arranged in a first of the at least two chambers, and the part of the electrical power generation system (in particular a generator and/or power converter) may be arranged in a second of the at least two chambers. The chambers may for example be hermetically sealed against each other. Safety may thereby be improved, since in case of an escape of produced gas, the danger of explosion may be minimized.

The wind turbine may for example comprise an arrangement configured to generate an over-pressure in the first chamber and may preferably further comprise one or more vents in the nacelle housing configured to vent gas present in the first chamber into ambient air outside the nacelle housing. Accumulation of produced gas and diffusion of produced gas into the second chamber may thus be prevented.

The electrolyzer may comprise plural electrolyzer stacks, which may be connected electrically in different ways, for example in series (for high-voltage supply levels) or in parallel (for lower voltage supply levels). The nacelle housing may include a support structure that provides at least two support levels arranged one on top of the other, and each support level may support at least one electrolyzer stack. A relatively large number of electrolyzer stacks may thus be arranged within a relatively small space inside the nacelle. Two, three, four or more support levels may be provided, for example in the form of respective floor racks or different floorings.

The nacelle housing may include at least one wall section extending in horizontal direction, wherein two or more electrolyzer stacks may be arranged in horizontal direction along (e.g. next to each other) the at least one wall section. For a semi-ellipsoidal-shaped nacelle housing, one curved wall section may for example be present, or for a cuboid-shaped housing, one, two, or three wall sections may be provided with respectively arranged electrolyzer stacks. For example, the nacelle housing may have a rectangular or trapezoidal cross-section, with the generator being arranged at one wall thereof, and electrolyzer stacks being arranged at one, two, or three walls thereof (e.g. on two sidewalls and a rear wall).

The nacelle may comprise a support structure arranged inside the nacelle and the electrolyzer may comprise two or more electrolyzer stacks suspended from the nacelle support structure inside the nacelle housing. A compact arrangement may likewise be achieved by such arrangement.

Electrolyzer stacks of the electrolyzer may in particular be distributed at least on two or three sides around an opening in the nacelle housing towards the wind turbine tower.

In an embodiment, the nacelle may be mounted above an upper opening of the wind turbine tower, and the nacelle may comprise a generator support frame for supporting a generator of the electrical power generation system. The support frame may extend in a first direction away from the upper opening (towards the generator). It may further include a rear section of the nacelle that extends in a second direction away from the upper opening, which is opposite to the first direction. It may further include a middle section that is arranged above the upper opening, for example between the rear section and the generator supported on the frame. The nacelle housing may enclose at least the rear section and the middle section and at least partly enclose the generator support frame. In some embodiments, it may also enclose the generator. The electrolyzer may comprise at least one electrolyzer stack (preferably plural) arranged in the rear section of the nacelle and/or comprise at least one electrolyzer stack (preferably plural) arranged in the middle section of the nacelle. A compact arrangement in which weight in the nacelle is balanced and distributed in a beneficial way may thereby be achieved.

The electrolyzer may comprise at least two electrolyzer stacks connected in series and/or comprise at least two electrolyzer stacks connected in parallel. The electric characteristics of the electrolyzer may thus be adjusted to the electric characteristics of the power generation system.

The part of the electrical power generation system may comprise at least a distribution bus (e.g. busbar) and/or cable system arranged inside the nacelle housing. The busbar and/or cable system may be coupled to a generator of the power generation system to receive electrical power from the generator (directly or via an AC-to-DC converter, and possibly a transformer) and may be configured to distribute the received electrical power to plural electrolyzer stacks of the electrolyzer which are electrically coupled to the busbar and/or cable system, respectively. By such busbar, an efficient distribution to plural electrolyzer stacks connected in parallel may be achieved.

In some implementations, a generator of the power generation system may provide DC electrical power that is provided to the electrolyzer. In other implementations, an AC electrical generator may be provided, and the electrolyzer may be configured to receive AC electrical power (it may for example include an integrated rectifier). It is however preferred to provide an AC generator and an AC-to-DC converter to supply DC voltage to the electrolyzer.

The wind turbine may further comprise a controller configured to control an activation and deactivation of electrolyzer stacks of the electrolyzer in dependence on an amount of electrical power and/or a voltage level generated by the electrical power generation system. The controller may accordingly switch on or off electrolyzer stacks (which may be provided in form of modules) to control the load applied to the power generation system. For example, respective switches may be actuated to connect or disconnect an electrolyzer stack from the power generation system.

The wind turbine may further comprise an auxiliary power connection extending in the wind turbine tower for providing auxiliary electrical power from a platform of the wind turbine to one or more auxiliary components in the nacelle, and/or for providing electrical power generated by the electrical power generation system of the wind turbine to one or more electrical consumers on a platform of the wind turbine (such as to the other components of the hydrogen production system). Auxiliary components of the wind turbine in the nacelle may thus be supplied either by generated electrical power or by electrical power received via the auxiliary power connection. Similarly, consumers on the platform of the wind turbine may be powered either from generated electrical power or from power received via a connection to e.g. a power grid or other power providing system separate from the wind turbine. Either one or both possibilities may be provided for feeding such auxiliary consumers or for feeding electrical consumers of the hydrogen production system. In an example, the wind turbine may further comprise at least one of a transformer, a converter and a switchgear arranged on a platform of the wind turbine and configured to be coupled to a power grid or other power source to receive electrical power and to provide electrical power to such auxiliary power connection. For example, a step-down transformer which steps down the received voltage to a voltage level suitable for the electrical consumers on the platform or in the nacelle may be provided, and a respective switch gear may be provided on the platform. Electrical power may thus be received for permanently powering these consumers, or for temporarily powering these consumers, for example during startup of the wind turbine or in case of an outage or maintenance of the wind turbine.

One or more gas sensors may be provided in the nacelle and/or in the wind turbine tower to detect a leakage of gas produced by the hydrogen production system. The safety of the wind turbine may thereby be improved.

In some implementations, the wind turbine may only be configured to produce hydrogen gas, and may not export any generated electrical power. In other configurations, the wind turbine may provide both, hydrogen production and export of generated electrical power. Preferably, generated electrical power is only used to power the hydrogen production system and possibly to power auxiliary consumers of the wind turbine, but not for electrical power export.

According to a further embodiment of the invention, a method of assembling a wind turbine is provided. The method comprises arranging a nacelle on a wind turbine tower, wherein the nacelle comprises a nacelle housing of the nacelle; arranging at least part of an electrical power generation system of the wind turbine in the nacelle housing; arranging an electrolyzer of a hydrogen production system in the nacelle housing; electrically coupling the electrolyzer to the part of the electrical power generation system inside the nacelle housing, the electrolyzer being configured to receive electrical power from the electrical power generation system; and arranging one or more other components of the hydrogen production system at a base of the wind turbine tower and/or within the wind turbine tower. By such method, a wind turbine may be assembled that has advantages corresponding to those described further above. In particular, it may not be required to lift heavy components of the hydrogen production system to the nacelle level, and no additional modules or components may need to be mounted to the nacelle housing.

The steps of the method may have a different order. For example, the part of the power generation system and/or the electrolyzer may first be arranged inside the nacelle housing, and the nacelle including these components may be lifted to the top of the wind turbine tower where it is mounted. The method may be performed so as to assemble a wind turbine having any of the configurations described herein. In particular, any steps described with respect to the wind turbine may form part of the assembly method.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine according to an embodiment.
Fig. 2 is a schematic drawing showing a nacelle of a wind turbine according to an embodiment.
Fig. 3 is a schematic drawing showing an arrangement of electrolyzer stacks within a nacelle of a wind turbine according to an embodiment.
Fig. 4 is a schematic drawing showing an arrangement of electrolyzer stacks within a nacelle of a wind turbine according to an embodiment.
Fig. 5 is a schematic drawing showing an arrangement of electrolyzer stacks within a nacelle of a wind turbine according to an embodiment.
Fig. 6 is a schematic drawing showing an arrangement of components of a hydrogen production system and of auxiliary units on a platform of a wind turbine according to an embodiment.
Fig. 7 is a schematic drawing showing an arrangement of components of a hydrogen production system and of auxiliary units on a platform of a wind turbine according to an embodiment.
Fig. 8 is a schematic drawing showing a wind turbine according to an embodiment, wherein a pumping arrangement and conduits within the wind turbine tower are illustrated.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

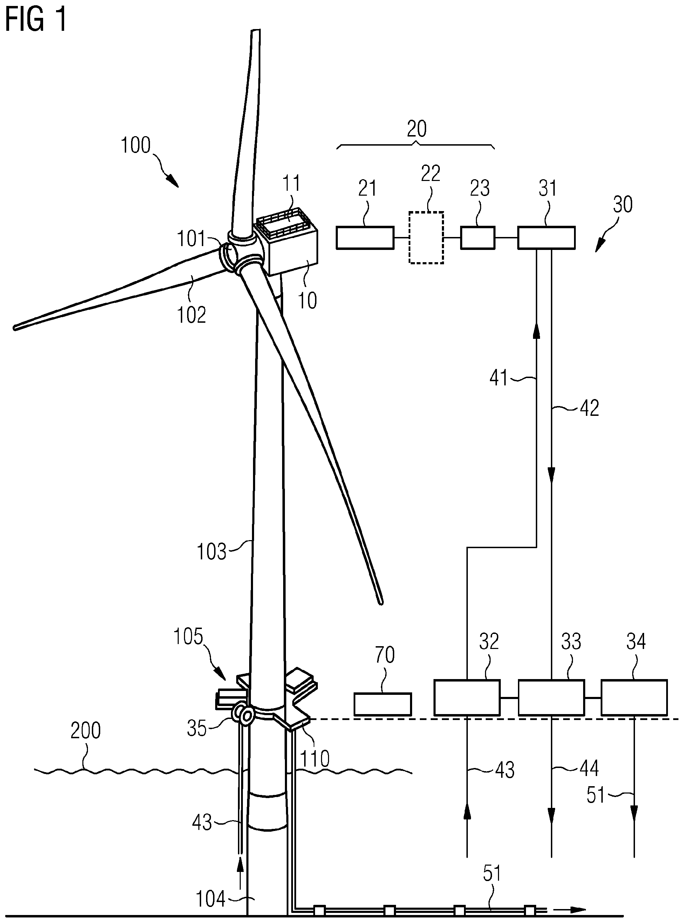

Fig. 1 schematically illustrates a wind turbine 100 comprising a nacelle 10 and a wind turbine rotor 101 with rotor blades 102. Nacelle 10 is mounted on top of a wind turbine tower 103, which is supported by a support structure (foundation) 104, which may be a bottom-fixed foundation, such as a monopile, a jacket, a gravity-based foundation, or may be a floating foundation. Wind turbine 100 further includes a platform 110 supported by foundation 104 and arranged at a base 105 of the wind turbine tower 103 above a seawater level 200. Wind turbine 100 is an offshore wind turbine and may form part of an offshore wind park comprising plural corresponding wind turbines, and optionally conventional wind turbines.

Wind turbine 100 comprises an electrical power generating system 20 that includes a generator 21, and that may further comprise a transformer 22 and a power converter 23. It may further comprise a distribution bus or distribution cable system for distributing generated electrical power to plural electrolyzer stacks of an electrolyzer 31, as explained in more detail further below.

Wind turbine 100 further comprises a hydrogen production system 30 that includes an electrolyzer 31 and one or more other components 32, 33, 34. At least part of the power generation system 20 and the electrolyzer 31 are arranged and installed within a housing 11 of the nacelle 10. Electrolyzer 31 is supplied with electrical power from generator 21 either directly or via the AC/DC converter 23 and/or the transformer 22, depending on the configuration. Transformer 22 is optionally provided for adjusting the voltage level to the voltage level required by electrolyzer 31, which is generally a low-voltage level below 2000 V, so that transformer 22 may be a low-voltage-to-low-voltage transformer. AC-to-DC converter 23 may be provided if such conversion is necessary and may be implemented as a passive rectifier or an actively controlled rectifier. A control system including a wind turbine controller and a converter controller (not shown) may be provided in wind turbine 100.

The hydrogen production system 30 may comprise a water treatment system 32 which may include a desalination unit, and may further include a treatment unit that may comprise one or a combination of a purification unit, a sterilization unit, a filtration unit, and the like. A water intake module 35 may be provided and via a seawater intake 43, seawater may be taken up, treated, and provided as clean water via a water supply conduit 41 to the electrolyzer 31. Using electrical power generated by power generation system 20, the electrolyzer 31 produces hydrogen gas by electrolysis of the supplied clean water and provides a gas/liquid mixture via a gas/liquid return conduit 42 to the gas/liquid separator 33. Water separated from the gas may be discharged via water outlet 44 or may be provided to treatment system 32. Optionally, a compressor unit 34 may be provided as part of the hydrogen production system 30 to compress the produced hydrogen gas. The hydrogen gas may be exported via an export conduit 51, which can for example be a pipeline leading to an onshore site. In other implementations, produced hydrogen gas may be stored in a tank, which may be located on platform 110, in tower 103, in foundation 104, or on a floating vessel.

The treatment system 32, the gas liquid separator 33 and optionally the compressor unit 34 form part of the hydrogen production system 30 and are located on the platform 110, i.e. they are not located in nacelle 10. A further water purification unit, such as a filter, may be provided at the top of tower 103 or in nacelle 10 in order to ensure the purity of the water supplied to electrolyzer 31, yet this is optional. Accordingly, all of the components of the hydrogen production system 30 except the electrolyzer 31, the optional purification unit (not shown) and the required electrical connections (including control connections and supply connections) and the flow conduits are arranged outside the nacelle 10 and in particular at the base 105 of wind turbine tower 103, more specifically on the platform 110 or within the tower 103. Nacelle 10 may thus be compact and lightweight. Further, as part of the power generation system 20 and the electrolyzer 31 are provided within housing 11 of nacelle 10, large diameter electrical power cables can be provided to supply power to electrolyzer 31, as these cables do not need to be twisted (e.g. during yawing of the nacelle) and can provide a high-current direct connection. The efficiency may thereby be improved. Further, since the wind turbine 100 exports hydrogen gas, no costly subsea cables are required for transporting the generated energy to an onshore site.

For the purpose of illustration, elements shown on the lefthand side of Fig. 1 are again schematically shown on the right-hand side of the figure; these elements designated by the same reference numerals are the same elements and they may not be present in duplicate. Rather, they are arranged within the nacelle 10 or on platform 110, as described herein.

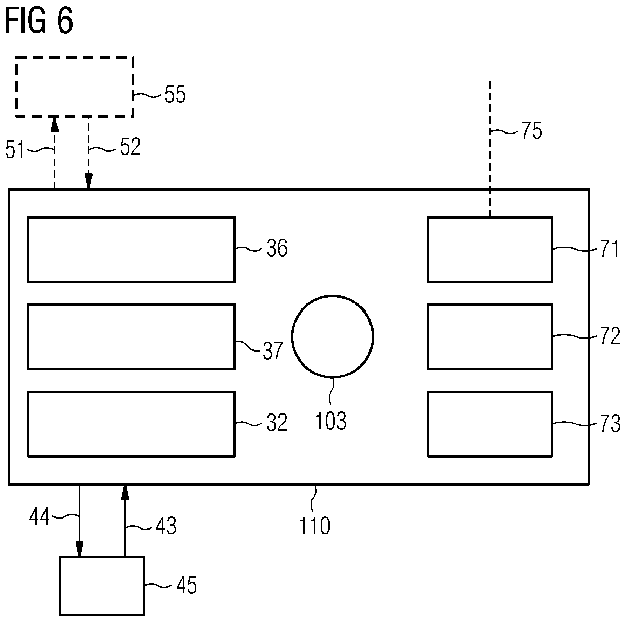

Wind turbine 100 may be configured to provide no electrical power output to any power grid, i.e. the generated electrical power may be entirely used by electrolyzer 31 for hydrogen production, except for power required to power components of hydrogen production system 30 and/or auxiliary components of wind turbine 100. However, there may still be an auxiliary electrical connection provided to a power grid or other power source, such as a wind farm grid, to supply such components of the hydrogen production system and/or auxiliary components of the wind turbine with electrical power, for example in case of low-wind conditions or no electrical power being produced by power generation system 20. A respective auxiliary module 70 may be provided, which may for example include a step-down transformer unit 71 and a switch gear unit 72 as shown in Fig. 6. It should be clear that Fig. 1 does not illustrate all components that can be comprised in the wind turbine 100, and in particular in the hydrogen production system 30, but further components may be present as described further below.

As wind turbine 100 may be configured to not export electrical power, the nacelle 10 may not comprise any respective DC-to-AC converter (which conventionally forms part of a back-to-back converter to provide the required AC frequency of the grid into which the power is fed) and may further not comprise a respective step-up transformer that provides the voltage level of either the collector grid into which the power is fed or of the power grid, which is typically above 2000 V, in particular above 10.000 V. Space and weight may thus be saved in nacelle 10, so that the size of nacelle 10 may be maintained even though electrolyzer 31, which can include plural stacks, is arranged inside nacelle 10.

Auxiliary components of wind turbine 100 may for example comprise a wind turbine controller, a yaw drive, pitch drives, lights, service equipment such as cranes or lifts, communication equipment, cooling equipment and/or the like. Such auxiliary components of the wind turbine may accordingly be supplied with electric power via power generation system 20 and/or via auxiliary module 70. Additionally or alternatively, wind turbine 100 may include a backup storage, which may include a fuel cell that may convert produced hydrogen into electrical energy, or a battery storage system, such as a backup UPS (uninterruptable power supply).

Gas export pipe 51 may for example lead into a gas grid, e.g. a gas collection system of the wind farm. Platform 110 may be located close to or at a tower flange of wind turbine tower 103.

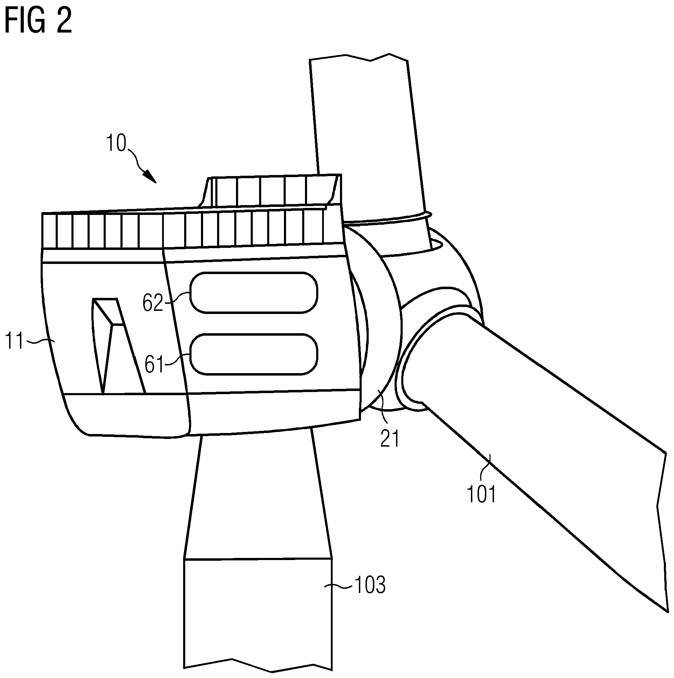

Fig. 2 illustrates a particular implementation of wind turbine 100, wherein nacelle 10 has a cuboid shape, wherein generator 21 (which may be a direct drive generator) is arranged on one side of the nacelle housing. A separate generator housing may be provided, or the nacelle housing 11 may extend to include the generator 21, or the generator housing 21 may form part or all of a sidewall of the nacelle housing 11. Other configurations are certainly conceivable, and nacelle housing 11 may for example have a semi-ellipsoidal shape, or any suitable shape. As schematically illustrated in Fig. 2, two or more electrolyzer stacks 61, 62 forming part of the electrolyzer 31 are arranged within the nacelle housing 11. Nacelle housing 11 may in particular be one single housing that houses both, the electrolyzer 31 and at least part, or all of the power generation system 20. If provided, the transformer 22 and/or the power converter 23, and preferably the distribution bus or distribution cables of the power generation system 20 are comprised within the same nacelle housing 11 as the electrolyzer 31.

The electrolyzer stacks 61, 62 may be connected in series, or they may be connected in parallel. The type of connection can be chosen in accordance with the output voltage level of the power generation system 20 and the input voltage level of the electrolyzer stacks. By an appropriate configuration, no transformer 22 may be required.

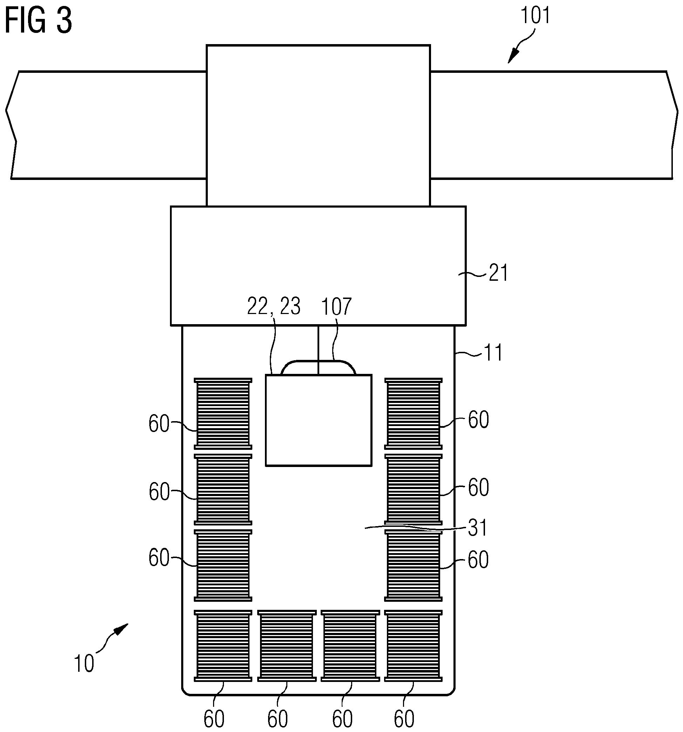

Fig. 3 illustrates a particular arrangement of plural electrolyzer stacks 60 of the electrolyzer 31 within the nacelle housing 11. As can be seen, the nacelle housing 11 encloses an inner volume, which may be bordered on all sides by the nacelle housing 11, or which may (partially) be bordered on one side by the housing of generator 21. The sectional top view of Fig. 3 illustrates three walls of the nacelle housing 11 that extend horizontally (i.e. within the drawing plane). On each of these walls, plural electrolyzer stacks 60 are arranged next to each other in horizontal direction. Accordingly, a relatively larger number of electrolyzer stacks can be arranged within nacelle 10. Preferably, the electrolyzer stacks 60 are arranged next to but not above an upper opening 107 of wind turbine tower 103, so that the nacelle is accessible from within the wind turbine tower. As can be seen, part of the power generation system, such as transformer 22 and power converter 23, and the electrolyzer 31 are arranged within the same inner volume of the housing 11.

In other configurations, electrolyzer cells may be arranged only along one or two walls of the housing 11, or the housing 11 may only have one or two curved horizontal walls, along which plural electrolyzer stacks may be arranged.

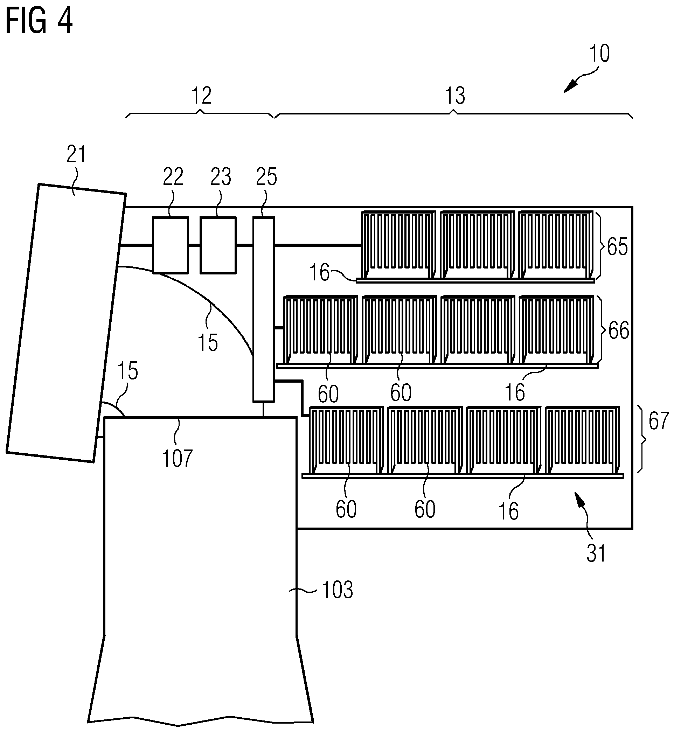

Fig. 4 illustrates a further particular implementation of the nacelle 10 of Fig. 1, which may be combined with the configuration of Fig. 3. As can be seen, at least two support levels 16 are provided on each of which one, two or more electrolyzer stacks 60 are arranged. First, second and third groups 65, 66 and 67 of electrolyzer stacks 60 are arranged on three different support levels 16 in the example of Fig. 4. A different number of support levels, such as one, two, four or more may likewise be provided. A two floor rack may be arranged in the nacelle to provide the respective support levels, or the nacelle housing may be provided with different floorings. One support level may also be provided for example by suspending the group 65 from a ceiling of the nacelle.

Accordingly, by arranging a plurality of electrolyzer stacks at different support levels along the horizontal walls of the nacelle housing 11, a relatively large number of electrolyzer stacks may be arranged within the nacelle 10 without requiring an increase of the nacelle size or without requiring separate enclosures to be mounted outside the nacelle housing 11.

In the example of Fig. 4, the power generation system 20 includes a distribution bus that is provided in form of a bus bar 25 for distributing the electrical power to the groups of electrolyzer stacks. The electrolyzer stacks in each group may for example be connected in series, and each group may be connected in parallel to bus bar 25. It should be clear that this is only an exemplary configuration, and that the type of connection (series and/or parallel) may be chosen in accordance with the specific electrical requirements. Return connections are not shown in Fig. 4, but may certainly be present. A cable system may be provided as an alternative to bus bar 25. Due to the short electrical path from the generator 21 to the electrolyzer 31, power losses can be reduced. It is again noted that transformer 22 and AC-to-DC converter 23 are optional. For example, generator 21 may be configured to provide DC power, or the electrolyzer 31 may be configured to receive AC electrical power (it may for example include an integrated rectifier).

Power converter 23 may further be employed to regulate the power provided to the electrolyzer stacks 60. The load may be adjusted in accordance with the power output of wind turbine generator 21, for example by switching on/off the separate electrolyzer stacks, which can be provided in form of independent electrolyzer modules. The electrolyzer stacks 60 may have the same power rating, or different stacks may have different power ratings. Wind turbine 100 may comprise a respective controller (not shown) that may accordingly control the electrolyzer stacks that are supplied with electrical power by switching the respective stacks on or off to match the power available from generator 21.

Transformer 21 may for example transform the voltage level provided by generator 21, which may typically be 690 V AC, to either a lower voltage level or a higher voltage level, as required by the electrolyzer 31. As mentioned above, this may depend on whether and how many electrolyzer stacks 60 are connected in series. Typical values for the voltage at which the electrolyzer is operated may be 400 V DC, 800 V DC, or 1,200 V DC.

As shown in Fig. 4, wind turbine tower 103 may include an upper opening 107, and a generator support frame 15 may be provided for supporting the generator 21 against wind turbine tower 103. The generator support frame extends in a first direction away from the upper opening 107 (to the left side in Fig. 1) where the generator 21 is mounted. The nacelle 10 may include a rear section 13 that extends away from the opening 107 in the opposite direction (compared to the direction of generator support frame 15). The nacelle may further include a middle section 12 arranged above the upper opening 107. As can be seen, the rear section 13 of nacelle 10 in particular extends within a vertical plane that passes through an axial center of the wind turbine tower 103. Preferably, one or more electrolyzer stacks of electrolyzer 31 are provided at least in the rear section 13 of nacelle 10, i.e. within the nacelle housing 11 extending in the respective direction and plane. Additionally or alternatively, one or more electrolyzer stacks of electrolyzer 31 may be provided in the middle section 12 of nacelle 10. As mentioned above, they may be arranged before the drawing plane or behind the drawing plane and preferably not above the opening 107. Accordingly, they are not visible in Fig. 4, but may be provided as shown in Fig. 3.

The electrolyzer stacks may thus be distributed efficiently within the nacelle, and a favorable weight balance within the nacelle may be achieved.

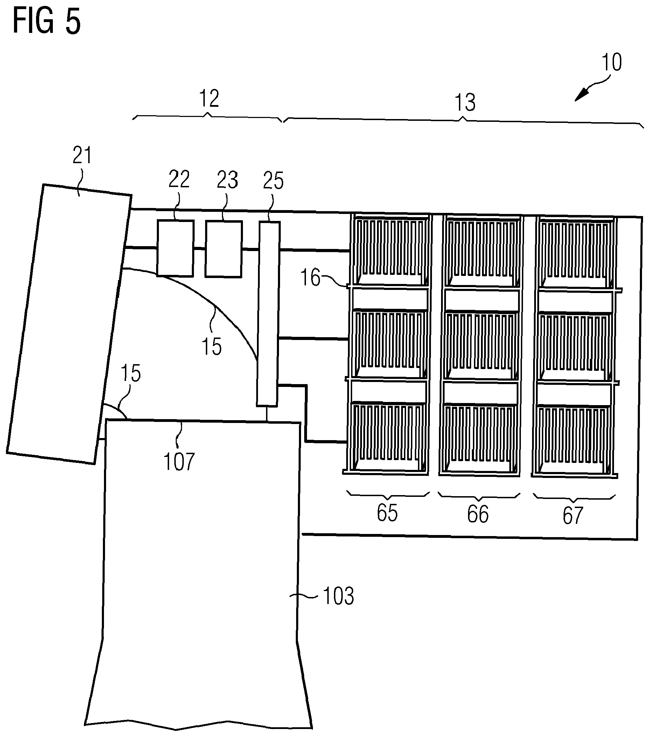

Fig. 5 illustrates a modification of the arrangement illustrated in Fig. 4, and may likewise be combined with the configuration shown in Fig. 3. In particular, plural electrolyzer modules are provided in a respective rack that is suspended from an upper part, such as a sealing or sealing support, of the nacelle housing. Each of these suspended racks may include a group of two or more electrolyzer stacks, such as the groups 65, 66 or 67. The explanations provided above with respect to the preceding figures 1 to 4 apply correspondingly to the embodiment of Fig. 5.

Fig. 6 illustrates exemplary components both of the hydrogen production system 30 and of an auxiliary system of wind turbine 100 that may be installed on the platform 110. Reference numeral 45 indicates the seawater intake, the seawater being supplied to the treatment system 32, which has been explained above in more detail. Electrical unit 37 may for example comprise electrical components of the hydrogen production system 30, it may for example include the optional compressor unit 34, electric pumps, and the like. Reference numeral 36 designates a control unit, which may control the hydrogen production system 30, and may additionally control the wind turbine 100.

The step-down transformer 71 may be connected to an electrical power supply connection 75, e.g. to a power grid to receive electrical power and to step-down the electrical power to a voltage level suitable for powering the components of the hydrogen production system 30 and/or the auxiliary consumers of the wind turbine. Switchgear 72 may be used to control the distribution of the received electrical power to the respective consumers, and may in particular disconnect consumers, for example in case of a fault of the respective component or the supply. A cooling unit 73 may for example provide cooling for components of the hydrogen production system 30 and/or for components of the wind turbine 100, such as components of power generation system 20 or auxiliary components of the wind turbine. The gas/liquid separator 33 may further be installed on platform 110 (not shown in Fig. 6). Reference numeral 55 indicates the gas export/import pipeline. As mentioned above, wind turbine 100 may be provided with storage facilities for storing produced gas, so that gas may also be received from other wind turbines for storage. A gas import conduit 52 may thus be provided.

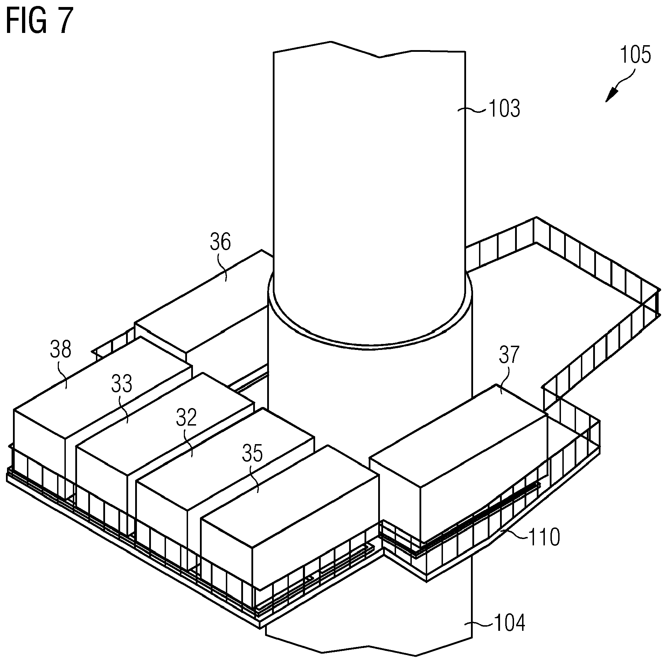

Fig. 7 illustrates a particular exemplary arrangement of the respective components of the hydrogen production system 30 on the platform 110. As illustrated, at least the water treatment system 32, the gas/liquid separator 33 and the water intake module 35 are arranged on the platform. Further, the electrical unit 37 and the control unit 36 are arranged on the platform, as well as an optional gas dryer module 38 that is provided to dry produced gas.

As illustrated, the components, in particular the respective modules and units, are provided in respective containers, which may be standardized containers (having a standard size). Transport and installation of the respective modules may thus be facilitated.

By providing all these heavy modules on the platform 110, the center of gravity can be kept low and the wind turbine tower 103 does not require enforcement, resulting in significant cost and material savings. Nacelle weight can be kept low and nacelle size can be kept small. Further, the crane capacity required for installation can be reduced, since only the electrolyzer 31 needs to be lifted to the nacelle height. Furthermore, the servicing and maintenance of the respective equipment, such as filter exchanges of the water treatment system 32 is facilitated. Replacement of the respective equipment is further facilitated, for example smaller floating vessels having a smaller lifting height and capacity may be employed. In particular, vessels without jack-up capability may be sufficient for servicing or exchange. Also, service technicians do not have to enter the nacelle either by a tower lift or by heli hoist. The servicing itself is facilitated, as it does not need to be carried out in the confined space within the nacelle.

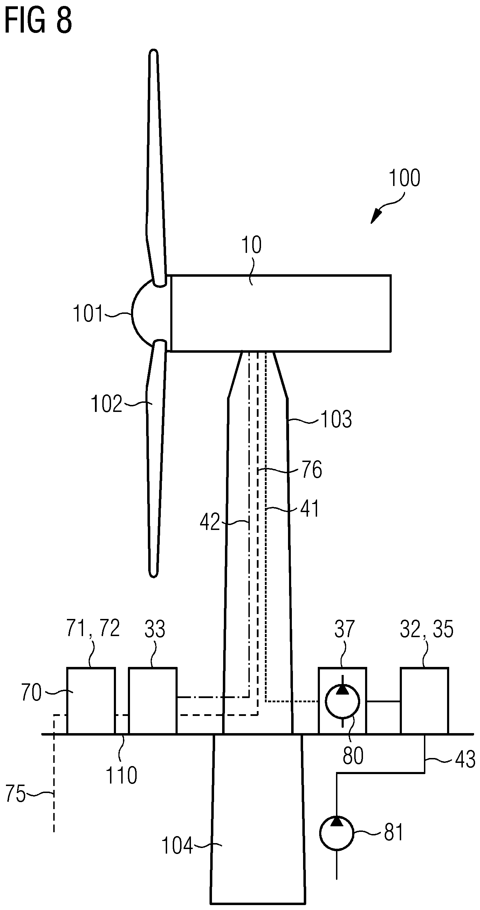

Fig. 8 illustrates a particular implementation of the wind turbine of Fig. 1, wherein the water supply conduit 41 and the gas/liquid return conduit 42 within the tower are illustrated. A pumping arrangement may be provided on platform 110 that may include a pump (booster pump or pressure pump) that provides the required pressure for pumping the treated water up to nacelle 10 (10 bar per 100 m water column). The pump may be provided as part of the electrical unit 37. Besides the pressure pump 80 at the platform 110, a submersible pump 81 may be provided as part of the pump arrangement, which may be installed below the seawater level. Submersible pump 81 may feed the water to the treatment system 32, which may include the desalination unit, filtering and purification units and the like. The treated water may then be pumped by the lift pump 80 which boosts the pressure sufficiently to feed the cleaned water to the electrolyzer 31 arranged within nacelle 10. It should be clear that for high towers, additional pumps may for example be provided within the tower to further boost the pressure.

As can be seen, no high-voltage high power cables need to be provided within the wind turbine tower 103. It should be clear that pump 80 may also be installed in the treatment system 32 and may provide both, suction of sea water into the treatment system 32 and providing the required pressure for pumping the water up to nacelle 10. The conduits 41, 42 may be provided by flexible pipes to enable the nacelle 10 to yaw, for example by providing a flexible pipe loop or other means to enable rotation of the pipe without damaging the pipe. The nacelle 10 may yaw several turns (several 360° rotations). A wind turbine controller may be provided and configured to ensure that the number of rotations is limited in accordance with the number of rotations that can be handled by conduits 41, 42. If that number is reached, counter nacelle rotation may be initiated to untwist the conduits. Alternatively, a rotating interface or connector may be provided in conduits 41, 42 to avoid any twisting of the conduits 41, 42.

Fig. 8 further illustrates a grid connection 75 that is provided to the auxiliary unit 70, which may include the respective step-down transformer 71 and switch gear 72. An auxiliary power connection 76 may be provided inside the wind turbine tower 103 up to the nacelle 10 in order to supply auxiliary components of the wind turbine in nacelle 10 with electrical power. As mentioned above, the received electrical power may likewise be used to supply components of hydrogen production system 30 with electrical power.

In Fig. 8, a gas compressor is not shown, but may be present. The gas export pipe 51 is not illustrated.

Several advantages may thus be provided by the disclosed wind turbine. The wind turbine may be simpler from an electrical perspective, as no main frequency converter and no main wind turbine transformer may need to be provided. A diode rectifier may simply be used for providing DC electrical power to the electrolyzer, which may also be an integrated part of the electrolyzer. Grid regulation equipment, such as tap changers and transformers, noise filters, compensation reactors, respective switchgear and the like may not need to be provided and may in particular not be present in the nacelle. No main power electric cables need to be provided in the wind turbine tower other than optionally a low-voltage cable for the auxiliary consumers and/or communication cables (optical or electrical). A direct connection between the power generation system 20 and the electrolyzer 31 can be provided, resulting in lower electrical losses. The main structure of the wind turbine may be improved, as heavy equipment is placed on the platform and only the electrolyzer stacks may be provided in the nacelle, which have a relatively low weight. Such wind turbine with a corresponding platform may be placed on a wide variety of foundation types.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

## Claims

1. A wind turbine, comprising:
- a nacelle (10) configured to be arranged on a wind turbine tower (103);
- a nacelle housing (11) of the nacelle (10), wherein the nacelle housing (11) is configured to house at least part of an electrical power generation system (20) of the wind turbine (100); and
- a hydrogen production system (30),
wherein the hydrogen production system (30) comprises an electrolyzer (31) configured to receive electrical power from the electrical power generation system (20), wherein the electrolyzer (31) is arranged inside said nacelle housing (11) of the nacelle (20) in which at least said part of the electrical power generation system (20) is arranged, wherein one or more other components (32, 33, 34, 35, 36, 37, 38) of the hydrogen production system (30) are arranged at a base (105) of the wind turbine tower (103) and/or within the wind turbine tower (103).

2. The wind turbine according to claim 1, wherein the other components of the hydrogen production system (30) comprise at least a gas/liquid separator (33) configured to receive a gas/liquid output from the electrolyzer (31), wherein the gas/liquid separator (33) is arranged at the base of the wind turbine tower (103) and/or within the wind turbine tower (103) .

3. The wind turbine according to claim 1 or 2, wherein said other components of the hydrogen production system (30) arranged at the base of the wind turbine tower and/or within the wind turbine tower include at least one or a combination of a desalination unit (32) configured to desalinate seawater and to provide desalinated water to the electrolyzer (31), a pump arrangement (80, 81) configured to pump water from the base of the wind turbine tower (103) to the electrolyzer (31) in the nacelle (10), a gas dryer unit (38), a gas purification unit, a compressor unit (34) configured to compress gas produced by the electrolyzer (31), a water treatment unit, and electrical power and control equipment (36) of said hydrogen production system (30).

4. The wind turbine according to any of the preceding claims, wherein the one or more other components form part of a group of components of the hydrogen production system (30), said group comprising all components of the hydrogen production system except said electrolyzer (31), fluid and electrical connections towards said electrolyzer (31), a purifier for water received by the electrolyzer (31), and monitoring and control components of said electrolyzer, wherein at least all components of said group are arranged at the base (105) of the wind turbine tower (103) and/or within the wind turbine tower (103).

5. The wind turbine according to any of the preceding claims, wherein the wind turbine (100) further includes a platform (110) arranged at a base (105) of the wind turbine tower (103), wherein said one or more other components of the hydrogen production system are arranged on said platform and/or within the wind turbine tower.

6. The wind turbine according to any of the preceding claims, wherein the hydrogen production system (30) comprises at least one water supply conduit (41) configured to supply water from a desalination unit (32) of the hydrogen production system (30) towards the electrolyzer (31), and a gas/liquid return conduit (42) configured to provide a gas/liquid mixture from the electrolyzer (31) to a gas/liquid separator (33) of the hydrogen production system (30) arranged at the base (105) of the wind turbine (103), the water supply conduit (41) and the gas/liquid return conduit (42) extending through the wind turbine tower (103).

7. The wind turbine according to any of the preceding claims, wherein the nacelle housing (11) includes a surrounding outer wall that surrounds and confines an inner volume inside the nacelle housing (11), wherein said part of the electrical power generation system (20) and said electrolyzer (31) are arranged within said inner volume.

8. The wind turbine according to any of the preceding claims, wherein said part of the electrical power generation system (20) comprises at least one of a generator (21) of the wind turbine configured to generate electrical power from rotation of a wind turbine rotor (101), a transformer (22), and an AC to DC power converter (23) configured to supply DC electrical power to the electrolyzer (31), and preferably further comprises a distribution bus (25) or distribution cable system configured to distribute electrical power to plural electrolyzer stacks (60) of the electrolyzer (31).

9. The wind turbine according to any of the preceding claims, wherein the nacelle housing (11) comprises an inner wall that is configured to separate an inner volume of the nacelle housing (11) into at least two chambers, the wall being configured to restrict or prevent a flow of gas between the chambers, wherein said electrolyzer (31) is arranged in a first of the at least two chambers, and wherein the part of the electrical power generation system (20) is arranged in a second of the at least two chambers.

10. The wind turbine according to any of the preceding claims, wherein the electrolyzer comprises plural electrolyzer stacks (60, 61, 62), wherein the nacelle includes within said nacelle housing (11) a support structure that provides at least two support levels (16) arranged one on top of the other, wherein each support level supports at least one electrolyzer stack, and/or wherein the nacelle housing (11) includes at least one wall section extending in horizontal direction, wherein two or more electrolyzer stacks (60) are arranged in horizontal direction along said at least one wall section.

11. The wind turbine according to any of the preceding claims, wherein the nacelle (10) is mounted above an upper opening (107) of the wind turbine tower (103), wherein the nacelle (10) comprises:
- a generator support frame (15) for supporting a generator (21) of the electrical power generation system (20), wherein the generator support frame (15) extends in a first horizontal direction away from the upper opening (107) ;
- a rear section (13) of the nacelle (10) that extends in a second horizontal direction away from the upper opening (107), the second direction being opposite to the first direction, and
- a middle section (12) of the nacelle (10) that is arranged above the upper opening (107),
wherein the nacelle housing (11) encloses at least said rear section (13) and said middle section (12) and at least partly encloses said generator support frame (15), wherein the electrolyzer (31) comprises at least one electrolyzer stack (60) arranged in the rear section (13) of the nacelle, and/or comprises at least one electrolyzer stack (60) arranged in the middle section (12) of the nacelle (10).

12. The wind turbine according to any of the preceding claims, wherein the part of the electrical power generation system (20) comprises a distribution bus (25) and/or cable system arranged inside the nacelle housing, wherein the distribution bus (25) and/or cable system is coupled to a generator (21) of the electrical power generation system (20) to receive electrical power from the generator (21) and is configured to distribute the received electrical power to plural electrolyzer stacks (60) of the electrolyzer (31) which are electrically coupled to the distribution bus (25) and/or cable system, respectively.

13. The wind turbine according to any of the preceding claims, further comprising a controller configured to control an activation and deactivation of electrolyzer stacks (60) of the electrolyzer (31) in dependence on an amount of electrical power and/or a voltage level generated by the electrical power generation system (20).

14. The wind turbine according to any of the preceding claims, further comprising an auxiliary power connection (76) extending in the wind turbine tower (103) for providing auxiliary electrical power from a platform (110) of the wind turbine (100) to auxiliary components in the nacelle (10), and/or for providing electrical power generated by the electrical power generation system (20) of the wind turbine (100) to one or more electrical consumers (32, 33, 34) on a platform (110) of the wind turbine (100).

15. A method of assembling a wind turbine, comprising:
- arranging a nacelle (10) on a wind turbine tower (100), wherein the nacelle (10) comprises a nacelle housing (11) of the nacelle (10);
- arranging at least part of an electrical power generation system (20) of the wind turbine in the nacelle housing (11);
- arranging an electrolyzer (31) of a hydrogen production system (30) in the nacelle housing (11);
- electrically coupling the electrolyzer (31) to the part of the electrical power generation system (20) inside the nacelle housing (11), the electrolyzer (31) being configured to receive electrical power from the electrical power generation system (20); and
- arranging one or more other components (32, 33, 34, 35, 36, 37, 38) of the hydrogen production system (30) at a base (105) of the wind turbine tower (103) and/or within the wind turbine tower (103).
